# EUROPEAN PATENT SPECIFICATION

(11) **EP 4 417 833 B1**
(45) Date of publication and mention of the grant of the patent: **10.12.2025**
(21) Application number: 23461516.9
(22) Date of filing: 14.02.2023
(51) Int. Cl.: F16D 65/78

(54) **HEAT SHIELD ASSEMBLY**
HITZESCHILDANORDNUNG
ENSEMBLE BOUCLIER THERMIQUE

(43) Date of publication of application: 21.08.2024
(73) Proprietor: Goodrich Corporation, Charlotte, NC 28217 (US)
(72) Inventor: BABICKI, Kamil, 48-370 Paczków (PL); SOKOLOWSKI, Marcin Szymon, 22-120 Wojslawice-Kolonia (PL); ZUK, Bartlomiej Kamil, 59-220 Legnica (PL); STRAS, Karol, 58-500 Jelenia Góra (PL); CHWALEK, Andrzej Pawel, 55-330 Miekinia (PL); KIELCZYKOWSKI, Piotr, 56-300 Ruda Milicka (PL); SCAGGS, Nicholas Edward, Springfield, 45504 (US); WHITTLE, Scottie G., Springboro, 45066 (US)
(74) Representative: Dehns

(56) References cited:
- CN-U- 201 604 509
- CN-U- 207 333 015
- US-A1- 2003 102 710
- US-A1- 2015 059 042
- US-A1- 2020 187 610
- US-A1- 2021 381 567

## Description

### TECHNICAL FIELD

The present invention relates to a heat shield assembly for a wheel for a vehicle especially, but not exclusively, for an aircraft wheel.

### BACKGROUND

Wheels on aircraft and other vehicles are often provided with a brake assembly comprising a stack of brake discs mounted inside the wheel, within the tube well of the wheel. The brake operates by compressing the brake discs together to slow and stop rotation of the wheel. The friction between the pressed brake discs generates a large amount of heat which can cause damage to the wheel and/or tyres. It is conventional to provide a heat shield between the brake assembly and the wheel rim or tube well to reduce the effects of the heat generated by braking on the wheel parts. The heat shield can also catch hot brake material that is ejected from the brake discs during braking, before it strikes the wheel.

Various types of heat shield are known but, typically, heat shields are in the form of metal sheets or panels provided concentric with the wheel tube well and spaced a small distance from the tube well. A typical heat shield assembly for a wheel is shown by document US 2021/381567 A1.

Typically, the heat shield is formed from several layers of sheet metal including an inner layer and outer layers (wherein 'inner' means closer to the brake parts, and the radial direction is defined when the heat shield is mounted in the wheel, the wheel axis defining the axial direction). The heat shield can be provided as a single cylindrical unit (of such inner and outer layers) but more typically is formed as a number of arcuate panels or segments of layers that are attached together via connectors at seams between the panels, to form a complete cylindrical heat shield.

Particularly with the increased use of carbon disc brakes, which have greater energy absorption capability than steel brakes and are significantly lighter, but which are larger than steel brake discs, it is important for the heat shields to be robust. There is, however, also a need for them to be as simple and lightweight as possible. In aircraft in particular, but also in other vehicles with braked wheels, there is a need to minimise the weight and size of the wheel assembly. Heat shields are therefore, often made of thin metal sheets but may be formed from two or more layers (as mentioned above) with an insulation gap therebetween.

Because of the high temperature and high stress/vibrational environments that braked wheels operate in and high centrifugal forces acting on the heat shields, as well as changes in tyre pressure, the heat shield can be caused to deform and/or deflect. This can cause high stresses on the heat shield and can cause the heat shield to come into contact with the wheel tube well which can, in turn, result in wheel abrasion. Where the panels of the heat shield are formed of inner and outer layers of sheet metal, with a radially inner layer and one or more radially outer layers, in use, the inner layer will tend to become hotter than the radially outer layer(s) and will, therefore, undergo a different thermal expansion. The connectors that join the panels at the seams secure the layers forming the panel together at the seams - i.e. the inner and outer layers of each panel are essentially clamped or secured together at the edges of the panel which means that the inner and outer layers of a panel are not able to move relative to each other. Because of this, the difference in thermal expansion between the inner and outer layers leads to the heat shield panel deforming or buckling. The deformed surface, which bows outwards, may abut against the wheel and therefor suffer or cause damage or degradation.

Further, attaching the heat shield to the wheel requires clips at certain locations which can be difficult and time consuming, as well as allowing little flexibility as to the position and orientation of attachment. Dismounting the heat shield from the wheel can also be difficult and time consuming.

There is a need for a heat shield assembly which is easier to attach to and/or dismount from the wheel and allows for more degrees of freedom in attachment but which is still robust and resistant to high temperatures and is relatively simple and lightweight.

### SUMMARY

According to the present invention, there is provided a heat shield assembly as defined by claim 1.

### BRIEF DESCRIPTION

The assembly according to the invention will be described, by way of example only, with reference to the drawings. Variations and modifications are possible within the scope of the claims.
Figure 1 shows an example of a heat shield in a wheel.
Figure 2 shows conventional heat shield panels as in Fig. 1.
Figure 3 shows a perspective view of a wheel having a heat shield according to this invention.
Figure 4 is a sectional view of a heat shield according to this invention assembled in a wheel.
Figure 5 is a detail of the assembly of Figs. 3 and 4.
Figure 6 is an example of the type of fastener used in the assembly of the invention.

### DETAILED DESCRIPTION

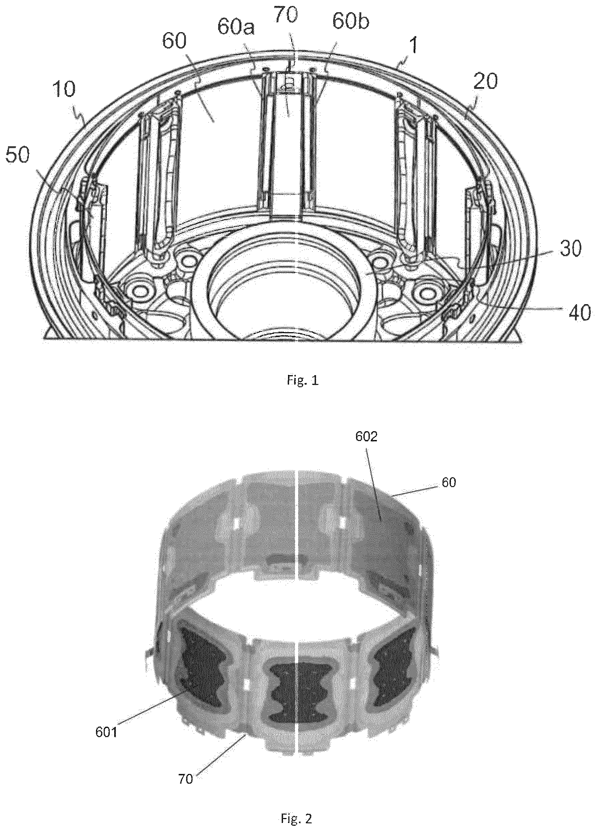

Fig. 1 shows a section of a typical wheel assembly comprising a wheel rim or tube well 1 having an outer diameter surface 10, on which a tyre (not shown) will usually be mounted, and an inner diameter surface 20 defining an interior cavity in which a brake assembly (not shown) will typically be arranged around a wheel hub 30. The hub 30 would be attached by bearing to an axle (not shown). The hub 30 is connected to the wheel rim 1 via a web 40. Rotor disc drive lugs (or torque bars) 50 extend axially across the tube well 1 for engagement with the brake discs.

To protect the wheel rim 1 from the heat generated during hard braking or from brake disc material ejected during braking, a heat shield is mounted to the inner diameter surface 20 of the wheel. The heat shield may be a single tubular shield or, as shown in this example, may be formed of several heat shield panels 60 provided between the rotor drive lugs 50. As best seen in Fig. 2, the heat shield/panels 60 is in the form of several thin metal sheets or layers sandwiched together, including an inner layer 601 and an outer layer 602, and possible one or more intermediate layers (not shown), and with insulation gaps (not shown) therebetween and is attached to the wheel so as to be spaced apart from the wheel inner diameter surface 20 by a small insulation gap (not shown). Here, the term 'inner layer' is used for the layer of the heat shield panel closest to the tube well and 'outer layer is the layer of the heat shield panel furthest from the tube well. Where the heat shield is made of a number of panels or segments attached together, the adjoining edges 60a, 60b of the panels are connected by means of connectors 70. The connectors 70 each define a seam between adjacent panels.

As mentioned above, and seen in Fig. 2, each panel 60 is formed of multiple layers 601, 602, etc. and these layers will be secured to each other at the edge of the panel to ensure the entire panel is secured by the connector(s). This means that the connector(s) will be affixed to all of the layers (three layers are shown in the examples, but other numbers of layers are possible) and so the layers of a panel 60 will not be able to move or shift relative to each other.

As mentioned above, in the harsh braking conditions experienced by e.g. wheels on an aircraft landing gear, high temperatures are reached and pieces of hot material can break off from the rotor discs. Thus, in use, the wheel assembly becomes hot and the purpose of the heat shield is to manage the heat generated in the wheel assembly. Accordingly, the heat shield materials also experience high temperatures. The temperature at the inner surface of the heat shield is higher than that at the outer surface which means that the inner layer 601 of the panels will become hotter than the outer layer 602 (see Fig. 2). Consequently, the inner layer will undergo greater thermal expansion than the outer layer. This can cause the heat shield to be damaged and/or to contact the wall of the tube well 1 by being deflected into the insulation gap between the heat shield and the tube well interior surface. Because the retainer is made of relatively thin, light material, deformation of the panels can cause the retainer to deflect outwards and contact the wheel rim and this can result in damage and wheel abrasion. Also, if the retainers are not sufficiently strong to retain the heat shield panels in such conditions, the heat shield panels themselves can also contact the wheel. This can cause wheel abrasion and/or heat shield damage/abrasion and require the entire wheel assembly to be replaced. When the panels need to be replaced, the fasteners connecting then to the wheel have to be undone using tools which can be difficult and time consuming and the same for having to attach new heat shields. The rigid nature of the metal sheets means that they have to be attached in a precise position and orientation.

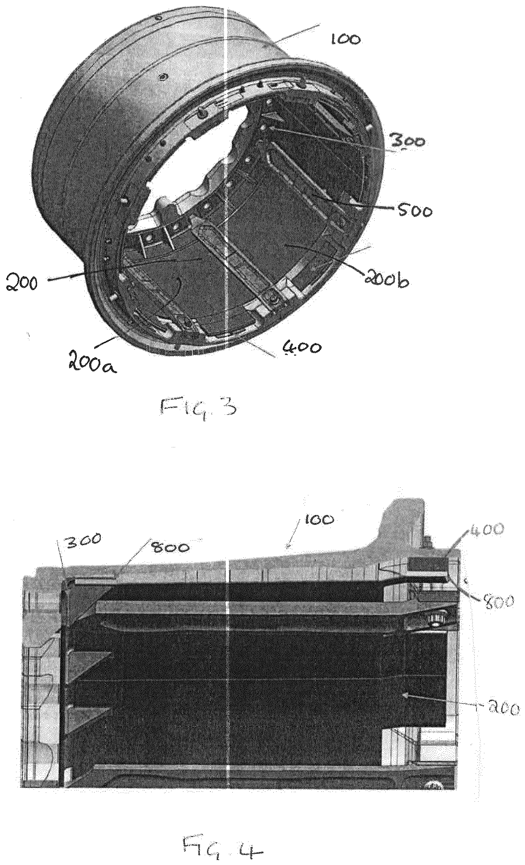

The aim of the present invention is to provide a heat shield assembly that can be more easily attached to and removed from the wheel and that is less likely to cause damage to the wheel or the heat shield in use. A heat shield assembly according to the invention will now be described with reference to Figs. 3 to 5.

The assembly comprises a heat shield sheet of flexible material and one or more metal hook and loop (i.e. Velcro^{®} ) fasteners for attaching the sheet of flexible material to a surface to be shielded by the heat shield, in use. The assembly may comprise a continuous sheet of flexible material sized and shaped to cover the surface when attached or, alternatively, may comprise a number of discrete panels which can be separately attached to the surface by means of the hook and loop fastener(s) to, together, cover the surface to be protected.

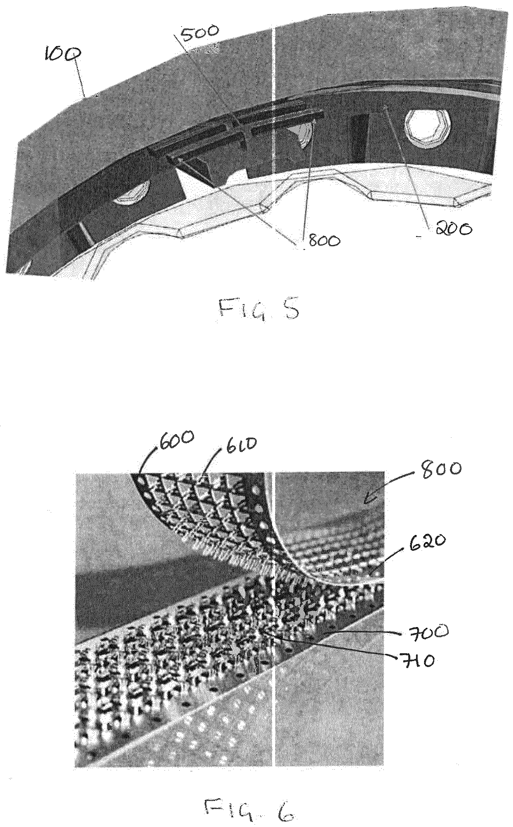

As shown in Fig. 3 and in Fig. 5, the heat shield of this invention may be provided in a wheel assembly, the heat shield 200 being attached radially inside the wheel 100 to provide a heat shield function as described above in relation to the conventional assemblies such as shown in Figs. 1 and 2. The inner of the wheel 100 is provided at one end with a supporting bracket 300 around the inner periphery and at the opposite end with mounting brackets 400 spaced around the periphery between torque bars 500 (corresponding to the torque bars 50 in the conventional assembly described above).

The heat shield is made of one or more sheets of a flexible or conformable material with heat resistant properties. Various materials are possible provided they have some heat resistant or insulative properties to function as a heat shield. The material may be a fabric. The heat shield can be formed as a single piece of material e.g. in the form of a cylindrical sleeve arranged to fit within and around the wheel interior or can be, as shown, provided as a number of heat shield panels 200a, 200b arranged to be attached between adjacent torque bars 500, and is attached to the wheel interior at the supporting bracket 300, at one end, and at the mounting bracket(s) 400 at the opposite end. The attachment is by means of a Velcro^{®} or other hook and loop fastener 800 provided between the respective bracket (300, 400) and the heat shield material 200.

The hook and loop e.g. Velcro^{®} fastener 800 is a two-part flexible hook and loop fastener such as shown in Fig. 6, having a first part 600 in the form of a strip or sheet on one side of which are provided a plurality of hooks 610 and a second part 700 in the form of a strip or sheet on one side of which are provided a plurality of loops 710. When the hooks and the loops are brought together, they mesh to fasten the first part to the second part. The other side of the sheets 620 of the first and second part are substantially flat or planar so that one part can be attached e.g. by adhesive, sewing, welding, rivet or other methods to one structure and the other part can be attached to another structure so that the structures can be attached to each other by engaging the two parts of the fastener. The hook and loop fastener 800 is preferably a metal hook and loop fastener e.g. of stainless steel.

In the example shown, the sheet of heat shield material 200 is provided, on one surface, (which will be the surface facing the wheel in this example) with one part of the fastener, which is attached to the material by, e.g., sewing, adhesive or other means. Where the sheet of material is to be attached to the wheel 100 at the supporting bracket 300 and at the mounting bracket(s) 400, the fastener part is attached at the top and bottom ends of the sheet of material to align with the brackets when in position inside the wheel. The second part of the fastener is provided on the corresponding bracket. To assemble the heat shield, the sheet of heat shield material is placed on the interior of the wheel such that the first parts of the fastener(s) mate with and mesh with the second parts of the fasteners mounted to the brackets, thus securing the heat shield material to the interior of the wheel. It is irrelevant whether the first part or the second part is attached to the heat shield material.

As mentioned above, several panels of a sheet of the material may be mounted around the wheel interior e.g. between torque bars 500, each panel attached to the supporting bracket and a mounting bracket by one or more fasteners. In other examples, (not shown), a single sheet of heat shield material could be positioned around the wheel interior and attached by several fasteners.

Whilst the example shown the heat shield material attached by the fasteners at the supporting and mounting brackets, it is also envisaged that the fasteners could be placed at different locations to attach the heat shield material to the wheel.

In another example, e.g. as shown in Fig. 4, the heat shield material can be attached to the wheel via attachment to the torque bars. One part of the fastener is attached to a side of the torque bar and the other part is attached to the heat shield material (e.g., in the example of panels of material, along the sides of the panel between the two ends). This provides a better distribution of hoop load over the structure.

The same concept may also be used for attaching heat shield material to other structures other than wheels.

By using such a hook and loop fastener, such as Velcro ^{®}, the fastener 800 can be re-used - i.e. the two parts can be attached and separated multiple times, without any loss in fastening strength. Also, if the part of the fastener that is attached to the heat shield material is replaced because the sheet is replaced, this can still attach to the existing part of the fastener on the wheel, and so that part can be re-used.

## Claims

1. A heat shield assembly configured to be mounted to a radially inner surface of a wheel rim, the heat shield assembly comprising a sheet of flexible heat shield material (200) and one or more hook and loop fasteners (800) comprising a first part (600) attached to the sheet of flexible heat shield material and a second part (700) configured to be attached to the radially inner surface of the wheel rim to which, in use, the sheet of flexible heat shield material is to be attached, one of the first and second parts having a plurality of hooks (610) and the other of the first and second part having a plurality of loops (710) such that when the sheet of flexible heat shield material is brought into engagement with the radially inner surface of the wheel rim, the hooks and loops mesh to secure the sheet of heat shield material to the radially inner surface of the wheel rim.

2. A heat shield assembly as in claim 1, wherein the flexible heat shield material is a fabric.

3. A heat shield assembly as claimed in claim 1 or 2, wherein the hook and loop fastener is a metal hook and loop fastener.

4. A heat shield assembly as claimed in claim 3, wherein the hook and loop fastener is a stainless steel hook and loop fastener.

5. A heat shield assembly as claimed in any preceding claim, wherein the hook and loop fastener is a Velcro^{®} fastener.

6. A heat shield assembly as claimed in any preceding claim comprising a plurality of panels of said heat shield material each provided with one or more of said fasteners.

7. A wheel assembly comprising a wheel rim having a radially inner surface and a radially outer surface, and a heat shield assembly as claimed in any preceding claim attached to the radially inner surface of the wheel rim by the one or more fasteners.

8. The wheel assembly of claim 7, further comprising a plurality of torque bars (500) arranged around the radially inner surface of the heat shield, and wherein the sheet of heat shield material is attached to the wheel rim at the torque bars by the fastener(s).

9. The wheel assembly of claim 7 or 8, the wheel rim having a first end provided with a supporting bracket (300) around its inner periphery and having a second end provided with mounting brackets (400) spaced around its inner periphery.

10. The wheel assembly of claim 9, wherein the sheet of heat shield material is attached to the wheel rim by the fasteners at the supporting bracket and the mounting brackets.

11. The wheel assembly of claim 7, 8 or 9, wherein the heat shield material is in the form of several panels (200a, 200b) spaced around the inner surface.

12. The wheel assembly of any of claims 7 to 11, being a wheel assembly for the landing gear of an aircraft.

## Patentansprüche

1. Hitzeschildanordnung, die dazu konfiguriert ist, an einer radial inneren Fläche einer Radfelge montiert zu werden, wobei die Hitzeschildanordnung ein Blatt aus flexiblem Hitzeschildmaterial (200) und ein oder mehrere Klettverschlüsse (800) umfasst, die einen ersten Teil (600), der am Blatt aus flexiblem Hitzeschildmaterial angebracht ist, und einen zweiten Teil (700) umfassen, der dazu konfiguriert ist, an der radial inneren Fläche der Radfelge angebracht zu werden, an der im Gebrauch das Blatt aus flexiblem Hitzeschildmaterial anzubringen ist, wobei einer des ersten und des zweiten Teils eine Vielzahl von Haken (610) und der andere des ersten und des zweiten Teils eine Vielzahl von Schlaufen (710) aufweist, derart, dass, wenn das Blatt aus flexiblem Hitzeschildmaterial in Eingriff mit der radial inneren Fläche der Radfelge gebracht wird, die Haken und Schlaufen ineinandergreifen, um das Blatt aus Hitzeschildmaterial an der radial inneren Fläche der Radfelge zu befestigen.

2. Hitzeschildanordnung nach Anspruch 1, wobei das flexible Hitzeschildmaterial ein Gewebe ist.

3. Hitzeschildanordnung nach Anspruch 1 oder 2, wobei der Klettverschluss ein Metallklettverschluss ist.

4. Hitzeschildanordnung nach Anspruch 3, wobei der Klettverschluss ein Edelstahlklettverschluss ist.

5. Hitzeschildanordnung nach einem der vorhergehenden Ansprüche, wobei der Klettverschluss ein Velcro^{®}-Befestigungselement ist.

6. Hitzeschildanordnung nach einem der vorhergehenden Ansprüche, umfassend eine Vielzahl von Platten aus dem Hitzeschildmaterial, die jeweils mit einem oder mehreren der Befestigungselemente bereitgestellt sind.

7. Radanordnung, umfassend eine Radfelge, die eine radial innere Fläche und eine radial äußere Fläche aufweist, und eine Hitzeschildanordnung nach einem der vorhergehende Ansprüche, die durch das eine oder die mehreren Befestigungselemente an der radial inneren Fläche der Radfelge angebracht ist.

8. Radanordnung nach Anspruch 7, ferner umfassend eine Vielzahl von Drehmomentstäben (500), die um die radial innere Fläche des Hitzeschilds herum angeordnet ist, und wobei das Blatt aus Hitzeschildmaterial an den Drehmomentstäben durch das/die Befestigungselement(e) an der Radfelge angebracht ist.

9. Radanordnung nach Anspruch 7 oder 8, wobei die Radfelge ein erstes Ende aufweist, das mit einem Tragbügel (300) um seinen Innenumfang herum bereitgestellt ist, und ein zweites Ende aufweist, das mit Montagebügeln (400) bereitgestellt ist, die um seinen Innenumfang herum beabstandet sind.

10. Radanordnung nach Anspruch 9, wobei das Blatt aus Hitzeschildmaterial durch die Befestigungselemente an dem Tragbügel und den Montagebügeln an der Radfelge angebracht ist.

11. Radanordnung nach Anspruch 7, 8 oder 9, wobei das Hitzeschildmaterial in Form mehrerer Platten (200a, 200b) vorliegt, die um die innere Fläche herum beabstandet sind.

12. Radanordnung nach einem der Ansprüche 7 bis 11, bei der es sich um eine Radanordnung für das Fahrwerk eines Luftfahrzeugs handelt.

## Revendications

1. Ensemble de bouclier thermique conçu pour être monté sur la surface radialement intérieure d'une jante, l'ensemble bouclier thermique comprenant une feuille de matériau de bouclier thermique flexible (200) et une ou plusieurs attaches auto-agrippantes (800) comprenant une première partie (600) fixée à la feuille de matériau de bouclier thermique flexible et une seconde partie (700) conçue pour être fixée à la surface radialement intérieure de la jante de roue à laquelle, en utilisation, la feuille de matériau de bouclier thermique flexible doit être fixée, l'une des première et seconde parties présentant une pluralité de crochets (610) et l'autre de la première et seconde parties présentant une pluralité de boucles (710) de sorte que, lorsque la feuille de matériau de bouclier thermique flexible est mise en prise avec la surface radialement intérieure de la jante de roue, les crochets et les boucles s'emboîtent pour fixer la feuille de matériau de bouclier thermique à la surface radialement intérieure de la jante de roue.

2. Ensemble de bouclier thermique selon la revendication 1, dans lequel le matériau de bouclier thermique flexible est un tissu.

3. Ensemble de bouclier thermique selon la revendication 1 ou 2, dans lequel l'attache auto-agrippante est une attache auto-agrippante métallique.

4. Ensemble de bouclier thermique selon la revendication 3, dans lequel l'attache auto-agrippante est une attache auto-agrippante en acier inoxydable.

5. Ensemble de bouclier thermique selon l'une quelconque des revendications précédentes, dans lequel l'attache auto-agrippante est une attache Velcro^{®}.

6. Ensemble de bouclier thermique selon l'une quelconque des revendications précédentes, comprenant une pluralité de panneaux dudit matériau de bouclier thermique, chacun étant pourvu d'une ou plusieurs desdites attaches.

7. Ensemble roue comprenant une jante de roue présentant une surface radialement intérieure et une surface radialement extérieure, et un ensemble de bouclier thermique selon l'une quelconque des revendications précédentes fixé à la surface radialement intérieure de la jante de roue par l'une ou plusieurs attaches.

8. Ensemble roue selon la revendication 7, comprenant en outre une pluralité de barres de couple (500) disposées autour de la surface radialement intérieure du bouclier thermique, et dans lequel la feuille de matériau de bouclier thermique est fixée à la jante de roue au niveau des barres de couple par la ou les attache(s).

9. Ensemble roue selon la revendication 7 ou 8, la jante de roue présentant une première extrémité pourvue d'un support d'appui (300) autour de sa périphérie intérieure et présentant une seconde extrémité pourvue de supports de montage (400) espacés autour de sa périphérie intérieure.

10. Ensemble roue selon la revendication 9, dans lequel la feuille de matériau de bouclier thermique est fixée à la jante de roue par les attaches au niveau du support d'appui et des supports de montage.

11. Ensemble roue selon la revendication 7, 8 ou 9, dans lequel le matériau de bouclier thermique se présente sous la forme de plusieurs panneaux (200a, 200b) espacés autour de la surface intérieure.

12. Ensemble roue selon l'une quelconque des revendications 7 à 11, étant un ensemble roue pour le train d'atterrissage d'un aéronef.
